# EUROPEAN PATENT APPLICATION

(11) **EP 1 167 925 A2**
(43) Date of publication of application: **02.01.2002**
(21) Application number: 01114909.3
(22) Date of filing: 19.06.2001
(51) Int. Cl.: G01C 21/36

(54) **Information service system, server and in-vehicle unit for use in information service system, and record medium on which program readable by in-vehicle unit or computer is recorded**

(30) Priority: 28.06.2000 JP 2000194286
(71) Applicant: Mazda Motor Corporation, Aki-gun, Hiroshima 730-8670 (JP)
(72) Inventor: Ohmura, Hiroshi, Aki-gun, Hiroshima 730-8670 (JP); Hosoda, Koji, Aki-gun, Hiroshima 730-8670 (JP); Hayakawa, Michitaka, Aki-gun, Hiroshima 730-8670 (JP); Hoshino, Emi, Aki-gun, Hiroshima 730-8670 (JP); Ushio, Masao, Aki-gun, Hiroshima 730-8670 (JP)
(74) Representative: Müller-Boré & Partner Patentanwälte

(57) **Abstract**

To reduce communication time and charge and construct an information service system with higher user convenience, a server containing no map data transmits additional information to be presented on a map as data in specific format to navigation equipment or a PC each containing map data. The navigation equipment and the PC presents a map by adapting the data in specific format to the map data and then adding the information related to the data in specific format to the map.

## Description

### Background of the Invention

### (a) Field of the Invention

This invention relates to an information service system for providing information to in-vehicle units mounted in vehicles and/or computers installed in private homes or other locations, a server and an in-vehicle unit for use in the information service system, and a record medium on which a program readable by the in-vehicle unit or the computer is recorded.

### (b) Description of the Prior Art

There is conventionally known an information service system for providing information from an information center to navigation equipment mounted in vehicles via the Internet (see for example Japanese Unexamined Patent Publication No. 11-101653). This system is configured so that spot information on facilities or the like is provided from the information center to the navigation equipment, and has an advantage in that a user can be always provided with latest information by simply updating information from the information center.

In providing spot information, however, the above information service system employs a procedure to first perform a process of adding an image representing facilities or the like to a given point on a map in the information center and then transmit the processed map.

If the map data is transmitted between the center and navigation equipment in this manner, the traffic volume is considerably high. This invites inconveniences of a long time required for the navigation equipment to receive information from the center and an increased communication charge.

The present invention has been made in view of the above circumstances and therefore has an object of reducing the communication time and charge, thereby providing a user-convenient information service system, a server and an in-vehicle unit for use in the information service system, and a record medium on which a program readable by the in-vehicle unit or a computer is recorded.

### Summary of the Invention

To attain the above object, the present invention is designed so that map data is not transmitted by the server of the information center.

Specifically, a first invention is directed to an information service system including: an in-vehicle unit mounted in a vehicle; a computer installed at a specific location other than the vehicle; and a server linked to the in-vehicle unit and the computer via a network.

Further, the in-vehicle unit and the computer each contain map data, and the server contains additional information to be presented on maps and is configured to transmit the additional information as data in specific format to the in-vehicle unit or the computer. Furthermore, the in-vehicle unit and the computer are configured to present the individual maps by adapting each piece of the data in specific format transmitted from the server to the associated piece of map data and then adding the information related to the piece of data in specific format onto the associated map.

Here, "network" described above may particularly be the Internet.

With the above system configuration, when the in-vehicle unit or the computer requests the server to provide spot information, the server will transmit the requested information to the in-vehicle unit or the computer via the network. In this case, since the server contains no map data, it will not transmit any piece of map data but transmit only the piece of data in specific format, which corresponds to additional information to be presented on the associated map, to the in-vehicle unit or the computer.

On receiving the piece of data in specific format transmitted from the server, the in-vehicle unit or the computer adapts the received piece of data to their own associated piece of map data, adds the spot information related to the piece of data in specific format onto the associated map, and then presents the map including the spot information. Thus, the user of the in-vehicle unit or the computer can check on the map the location of facilities where he wants to know.

In this manner, the information service system of the present invention is configured to provide only the additional information to be presented on the map from the server to the user based on the use of the map data contained in the in-vehicle unit or the computer. Therefore, the server will need to neither prepare the map data nor transmit it. Accordingly, the traffic volume can be extensively reduced and the transmission time and charge can be reduced, as compared with the case of transmitting the map data from the server to the navigation equipment or the like. As a result, this information service system provides the user with improved convenience and reduced cost.

Further, since the server contains no map data, it can be constructed at a low cost.

The above information service system is preferably configured as follows.

The in-vehicle unit or the computer preferably contains pieces of image data embeddable in an HTML document in addition to the pieces of map data, and the server preferably contains pieces of map selection data each of which specifies a map to be selected, pieces of coordinate data each of which specifies a point where the additional information is to be presented on the selected map, pieces of HTML document data, and pieces of image selection data each of which specifies an image to be embedded in the HTML document and is preferably configured to transmit the map selection data, coordinate data, HTML document data and image selection data to the in-vehicle unit or the computer.

Further, the in-vehicle unit or the computer is preferably configured to present the individual maps by selecting a specified map from among the pieces of map data based on the associated piece of map selection data transmitted from the server and adding the information to a specified point on the selected map based on the associated piece of coordinate data transmitted from the server and present the HTML document by selecting a specified image from among the pieces of image data based on the associated piece of image selection data transmitted from the server and adding the selected image to a specified point on the associated piece of HTML document data transmitted from the server.

Here, "pieces of map selection data each of which specifies a map to be selected" refer to pieces of data each of which specifies a map to be used for adding information thereto out of the pieces of map data of different scales contained in the in-vehicle unit or the computer, and for example, refer to pieces of data on different map scales. Further, "pieces of coordinate data each of which specifies a point where the additional information is to be presented on the selected map" refer to pieces of data each of which specifies which point on the selected map the image representing facilities or the like should be added to. Furthermore, "pieces of HTML document data" refer to pieces of document data that is used, for example, when the server provides the user with information and that includes a menu page which presents user-available services thereon or an input page through which the user selectively enters conditions or the like. Moreover, "pieces of image selection data each of which specifies an image to be embedded in the HTML document" refer to pieces of data each of which specifies which image should be selected from among the pieces of image data contained in the in-vehicle unit or the computer and specifies which point on the HTML document the selected image should be added to.

With the above configuration, only text data such as the map selection data, coordinate data, HTML document data and image selection data is transmitted from the server to the in-vehicle unit or the computer. Since the in-vehicle unit or the computer having received these text data contains the map data and the image data, they can construct a page with higher visibility by means of the map data and the image data. Presenting the higher-visibility page on the in-vehicle unit or the computer in this manner leads to improved user convenience. Further, since data transmitted from the server is text data, the traffic volume can be reduced and therefore the transmission time arid charge can be reduced. As a result, improvement in user convenience is compatible with reduction in user cost.

A second invention is directed to a server linked via a network to an in-vehicle unit which is mounted in a vehicle and contains map data and to a computer which is installed at a specific location other than the vehicle and contains map data.

Further, the server contains additional information to be presented on maps and is configured to transmit the additional information as data in specific format to the in-vehicle unit or the computer via the network.

Thus, the server contains no map data and therefore can be constructed at a low cost.

A third invention is directed to an in-vehicle unit that is mounted in a vehicle and contains map data and a processing program of performing processing with the use of the map data. The in-vehicle unit contains a plug-in for the processing program and is linked via a network to a server containing additional information to be presented on maps.

Further, the plug-in is configured to adapt data in specific format corresponding to the additional information having been transmitted from the server to the processing program.

In other words, this in-vehicle unit, which can use the high-convenience information service system as described in the first invention, is formed by simply adding, to an exiting in-vehicle unit including map data and a processing program of performing processing with the use of the map data such as processing of presenting a map, a plug-in for adapting data in specific format corresponding to additional information to be presented on the map to the processing program.

A fourth invention is directed to a record medium on which a program is recorded which can be read out by an in-vehicle unit that is mounted in a vehicle and that is linked via a network to a server containing additional information to be presented on maps.

Further, the record medium contains map data, a processing program of performing processing with the use of the map data, and a plug-in for the processing program, and the plug-in is configured to adapt data in specific format corresponding to the additional information having been transmitted from the server to the processing program.

Thus, the same operations and effects as in the third invention can be obtained.

A fifth invention is directed to a record medium on which a program is recorded which can be read out by a computer that is installed at a specific location other than a vehicle and linked via a network to a server containing additional information to be presented on maps.

Further, the record medium contains map data, a processing program of performing processing with the use of the map data, and a plug-in for the processing program, and the plug-in is configured to adapt data in specific format corresponding to the additional information having been transmitted from the server to the processing program.

The above map data, processing program and plug-in which are recorded on the record medium may be software bundled to the computer.

### Brief Description of the Drawing

Figure **1** is a schematic view showing the configuration of an information service system according to an embodiment of the present invention.

Figure **2** illustrates a home page of an information center.

Figure **3** illustrates an exemplary Web page ("CUSTOM PAGE") .

Figure **4** illustrates another Web page for making a search for spot information.

Figure **5** illustrates still another Web page ("Eating") for setting a search condition.

Figure **6** illustrates still another Web page ("Japanese Dishes") for setting a search condition.

Figure **7** illustrates still another Web page ("Search Area Selection") for setting a search condition.

Figure **8** illustrates still another Web page ("Area Name Selection") for setting a search condition.

Figure **9** illustrates still another Web page on which search results are listed.

Figure **10** illustrates still another Web page on which detailed information on a search result is presented.

Figure **11** illustrates still another Web page on which a map including additional spot information is presented.

### Description of the Preferred Embodiment

Hereafter, an embodiment of the present invention will be described with reference to the drawings.

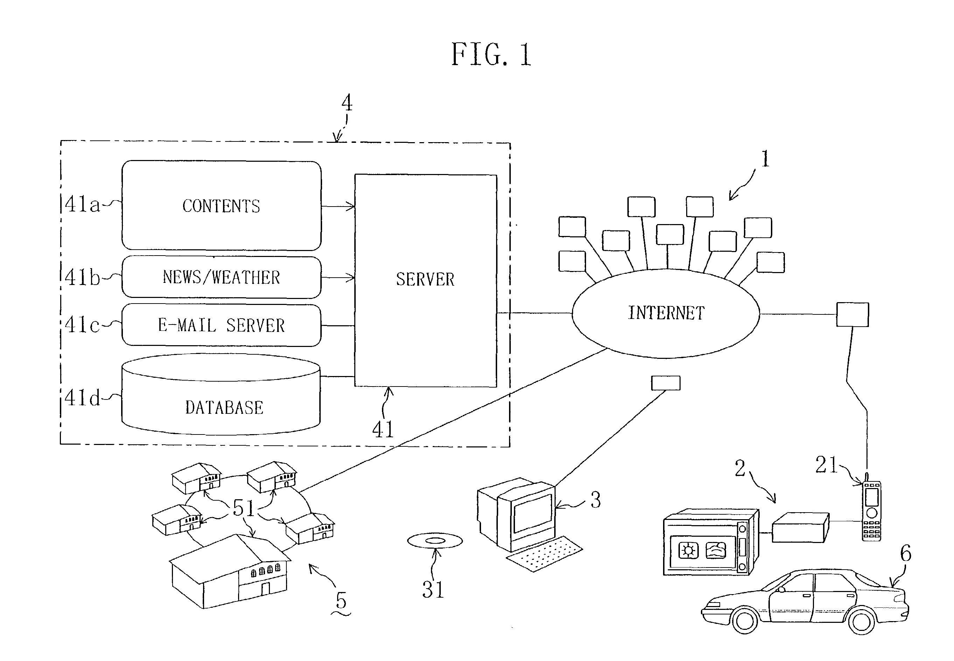

Figure **1** schematically shows the configuration of an information service system according to the embodiment of the present invention. The information service system includes the Internet **1** as a network, pieces of navigation equipment **2** as in-vehicle units each mounted in a vehicle **6**, personal computers (PCs) **3** as computers, an information center **4** for providing information to the pieces of navigation equipment **2** and/or the PCs **3**, and an automobile dealers network **5**. This information service system is configured to provide information from the information center **4** to the pieces of navigation equipment **2** and/or the PCs **3** via the Internet **1**.

A server **41** is placed in the information center **4**. The server **41** contains various types of contents **41a** (including spot information on facilities and so on) and news/weather information **41b** which are provided to users (the pieces of navigation equipment 2 and/or the PCs **3**), and contains E-mail server **41c** through which E-mails to be transmitted to or received from the pieces of navigation equipment **2** and/or the PCs **3** are relayed and a database **41d** in which personal information such as home addresses and birth dates and other information are registered for each user. The server **41** is thus characterized by containing no map data. Further, as hereinafter described, the server **41** is configured to transmit data in specific format, such as map selection data, coordinate data, HTML document data such as a menu page and image selection data, to the pieces of navigation equipment **2** and/or the PCs **3** via the Internet **1** and not to transmit any map data. Each piece of the map selection data specifies a map to be selected from pieces of map data each contained in the navigation equipment **2** and the PCs **3**. Each piece of the coordinate data specifies a point where additional information is to be presented on the selected map. Each piece of the image selection data specifies an image to be embedded in the HTML document.

The navigation equipment **2** contains pieces of map data of different scales and a processing program of performing processing with the use of each piece of the map data, such as map presentation, detection of the present position of the vehicle **6** by using a Global Positioning System (GPS) and operation of routing toward a destination, and has the same functions as those of the existing navigation equipment.

Further, the navigation equipment **2** is configured to be connectable with the Internet **1** through a communication means such as a portable telephone **21.**

The processing program contained in the navigation equipment **2** is provided with a plug-in. This plug-in is configured to act between the server **41** and the processing program to adapt various types of data transmitted from the server **41** to the processing program.

Specifically, the plug-in has the following five functions. The first function is to connect the navigation equipment **2** to the server **41**. The second function is to convert data in specific format having been transmitted from the server **41** into data adaptable to the processing program and inversely convert data to be transmitted from the navigation equipment **2** to the server **41** into the data in specific format so that data communicated between the server **41** and the navigation equipment **2** always take a specific format.

The navigation equipment **2** contains pieces of image data, such as icons, to be embedded into the HTML document data which is one of various types of data transmitted from the server **41**. The plug-in also has, as its third function, a function of selecting an image to be displayed from among the pieces of image data stored in the navigation equipment **2** based on the associated piece of image selection data transmitted from the server **41** and of adding the selected image to a specified point on the HTML document.

The plug-in also has, as its fourth function, a function of selecting a map to be used for adding information thereto from among the pieces of map data contained in the navigation equipment **2**, based on the associated piece of map selection data which has been transmitted from the server **41** and has specified the map to be selected. In addition, the fifth function of the plug-in is to add an image representing facilities or the like to a specified point on the selected map based on the associated piece of coordinate data transmitted from the server **41** (data that has specified a point where additional information is to be presented on the selected map). Note that presenting the map including the additional information is effected by the processing program.

As can be seen from the above, the navigation equipment **2** is configured to perform processing depending upon the type of data transmitted from the server **41**.

It should be noted that the map data, the processing program, the plug-in and the image data may be previously stored in a storage means attached to the navigation equipment **2** and may alternatively be recorded on a record medium (not shown) such as a CD-ROM or a DVD-ROM so as to be later read out by the navigation equipment **2**.

The PC **3** is installed at a specific location such as a home of the vehicle **6** owner and is configured to be connectable with the Internet **1** through an unshown modem or the like. The PC **3** is also configured to be capable of reading a storage medium **31**. The map data and the processing program of performing processing with the use of the map data such as map presentation processing are recorded on the record medium **31**. These software recorded on this record medium **31** may be supplied as software bundled to the PC **3**.

The processing program on the record medium **31** is provided with a plug-in. Like the plug-in included in the processing program of the navigation equipment **2,** this plug-in is also configured to act between the server **41** and the processing program for map data in the PC **3** to adapt the various types of data transmitted from the server **41** to the processing program.

The record medium **31** contains pieces of image data, such as icons, to be embedded into the HTML document. The plug-in included in the processing program of the PC **3** likewise has a function of selecting an image to be displayed from among the pieces of image data stored in the record medium **31** based on the associated piece of image selection data transmitted from the server **41** and of adding the selected image to a specified point on the HTML document.

The plug-in also has a function of adding an image representing facilities or the like to a specified point on a particular piece of map data contained in the record medium **31,** based on the associated piece of map selection data and piece of coordinate data which have been transmitted from the server **41.** Note that presenting this piece of map data including the additional information is effected by the processing program.

As described hereinbefore, the PC **3**, like the navigation equipment **2**, is connectable with the information center **4** via the Internet **1**, and contains the map data and the plug-in having the same functions as that for the navigation equipment **2**. Accordingly, the user can obtain, on the PC **3**, substantially the same service environment of the information center **4** as on the navigation equipment **2**.

The dealers network **5** is constructed so that the plurality of car dealers are linked to each other and is configured so that they can share customer information. The dealers network **5** is linked to the Internet **1**.

In this information service system, the user is allowed to use the following information services.

First, the user can access each Web site on the Internet **1** through his navigation equipment **2** or PC **3** and can transmit and receive E-mails on the navigation equipment **2** or the PC **3**.

Further, the server **41** transmits HTML document data in response to a request from the user through his navigation equipment **2** or PC **3**. As a result, the user can obtain, on his navigation equipment **2** or the PC **3**, information on news, weather forecast and so on contained in the server **41**.

Furthermore, the user can make, on his navigation equipment **2** or PC **3**, a genre-based search or a phone number-based search for information on facilities, such as restaurants, hotels, leisure facilities, sightseeing spots, shops, gas stations and motor pools, registered in the server **41**.

The spot information retrieved in the above manner is indicated as additional information on the map on the navigation equipment **2** or the PC **3**. Therefore, the user can check the location of the facilities or the like on the map. In the navigation equipment **2**, the obtained spot information may be set as a destination toward which the user is guided by routing.

Further, the user can also register the retrieved spot information in his own database **41d** of the server **41.** Therefore, if the user has searched in advance, for example on the home PC **3**, for spot information registered in the information center **4** and has registered the search result in his own database **41d** of the server **41,** he can obtain that information registered in his database **41d** of the server **41** through the navigation equipment **2** of the vehicle **6** at a later time and then set facilities or the like associated with the search result to a destination where he will be guided by routing. In this manner, in this information service system, the user can retrieve and register in advance, at his home or other places, information which he wants to use on a drive.

Furthermore, in the information service system, the user can receive, on his navigation equipment **2** or PC **3**, advise about periodic automobile maintenance or automobile safety inspection period from the dealer **51**. Moreover, for example, when the vehicle **6** gets out of order, the user can get in touch with the dealer **51** through the navigation equipment **2** to inform him of the vehicle **6** being out of order or how the vehicle **6** develops trouble.

Next, a concrete example of information service provided by this information service system will be described with reference to pages presented on the navigation equipment **2** or the PC **3**.

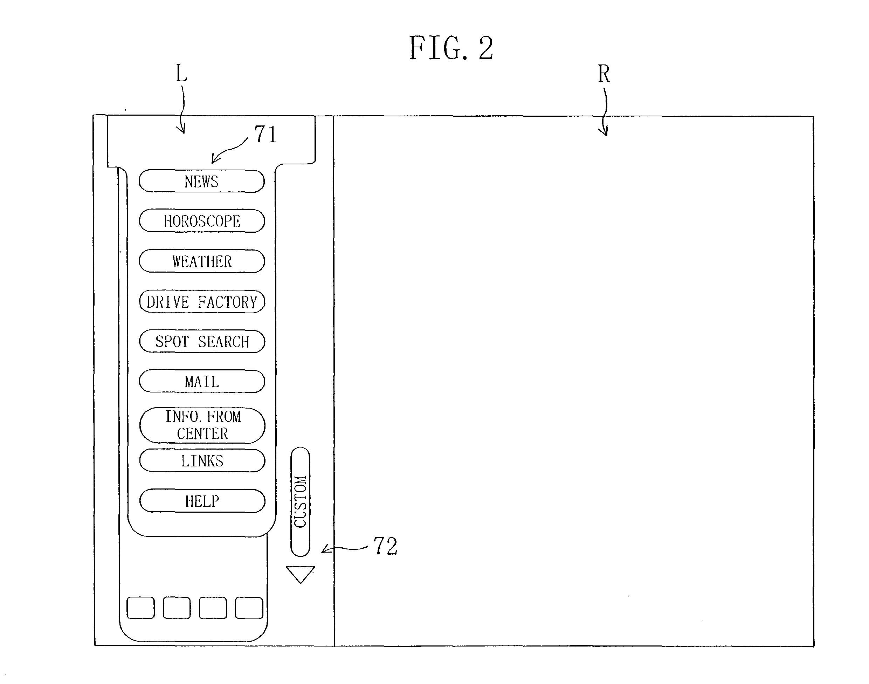

First, when the navigation equipment **2** or the PC **3** establishes a connection with the server **41** of the information center **4** by means of the portable telephone **21** or the modem, an HTML document is transmitted from the server **41** to the navigation equipment **2** or the PC **3**. As a result, such a frame-containing home page as shown in Figure **2** is displayed on the navigation equipment **2** or the PC **3**.

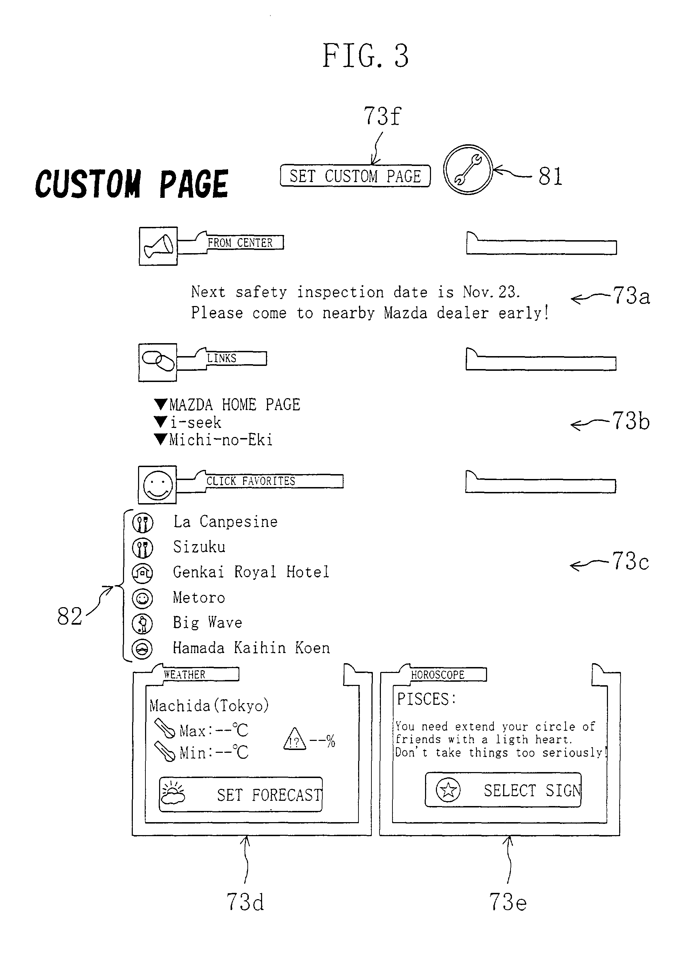

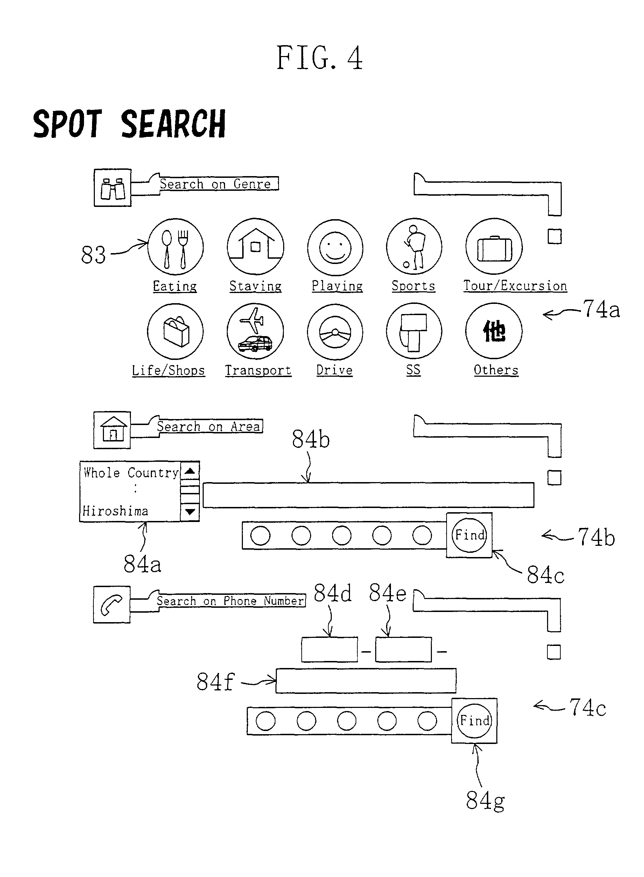

In a left-hand cell **L** of this page, there are arranged link buttons showing a list **71** of menu items including "NEWS", "HOROSCOPE", "WEATHER", "DRIVE FACTORY", "SPOT SEARCH", "MAIL", "INFO. FROM CENTER", "LINKS" and "HELP". A "CUSTOM" link button **72** is disposed below the list **71**. When the user clicks the "CUSTOM" link button **72**, a new HTML document is transmitted from the server **41** to the navigation equipment **2** or the PC **3** so that a page (CUSTOM PAGE) as for example shown in Figure **3** is displayed in a right-hand cell **R**. Note that this figure illustrates only the contents displayed in the right-hand cell **R** of the page shown in Figure **2** (it is the same with Figures **4** to **10**).

The "CUSTOM PAGE" is a page for presenting information, which has been registered in advance by each user in his own database **41d** of the server **41**, in a predefined display form. This page includes "FROM CENTER" column **73a**, "LINKS" column **73b**, "CLICK FAVORITES" column **73c**, "WEATHER" column **73d** and "HOROSCOPE" column **73e.** In the "FROM CENTER" column **73a,** information or advise provided by for example the information center **4** or the automobile dealer **51** is displayed. In the "LINKS" column **73b**, the names of Web sites registered in the database **41d** are displayed. When the user clicks these Web site names, he can access the corresponding Web sites. In the "CLICK FAVORITES" column **73c,** a list of destinations registered by the user in his database **41d** is displayed as link buttons. Further, a regional name displayed in the "WEATHER" column **73d** and the zodiac sign displayed in the "HOROSCOPE" column **73e** are selected in advance by the user. Such registrations and selections for the CUSTOM PAGE by the user are effected on a page (not shown) reached by clicking "SET CUSTOM PAGE" link button **73f** placed at the top of the CUSTOM PAGE.

In this case, as described above, the image data stored in the navigation equipment **2** or the PC **3** is used for each of icons **81** and **82** embedded in the HTML document on each page. Therefore, data (an HTML document) transmitted from the server **41** includes no image data, and the plug-in contained in the navigation equipment **2** or the PC **3** selects the individual images to be displayed based on the associated pieces of image selection data included in the data transmitted from the server **41** and then adds the selected images to respective specified points on the HTML document.

Next, the function of searching for spot information, which is one of the functions included in the information service system, will be described by using as an example the case of "search for a sushi shop at Naka-ku, Hiroshima-shi, Hiroshima-ken".

First, the user clicks "SPOT SEARCH" for searching for spot information, which is included in the list **71** of menu items as shown in Figure **2**. Thus, the corresponding data is transmitted from the navigation equipment **2** or the PC **3** to the server **41** and the server **41** then sends back a next HTML document. As a result, the navigation equipment **2** or the PC **3** presents a page for setting search conditions on which three search menu columns, i.e., "Search on Genre" **74a**, "Search on Area" **74b** and "Search on Phone Number" **74c,** are placed as shown in Figure **4**.

When making a "Search on Area" in the "SPOT SEARCH", the user selects the whole country or any one of prefectures in a scroll box **84a** placed at a left-hand part of the "Search on Area" column **74b** and also enters the name of a municipality in a text box **84b** placed on the right side of the scroll box **84a.** On the other hand, when making a "Search on Phone Number", the user enters a log-distance number, a dialing code and a phone number in three test boxes **84d, 84e** and **84f** in the "Search on Phone Number" column **74c**, respectively. When the user clicks either one of "Find" push buttons **84c** and **84g** respectively placed at lower parts of the search columns **74b** and **74c** after the end of the entries, each input data is transmitted from the navigation equipment **2** or the PC **3** to the server **41** and the server **41** then sends back a next HTML document associated with each input data.

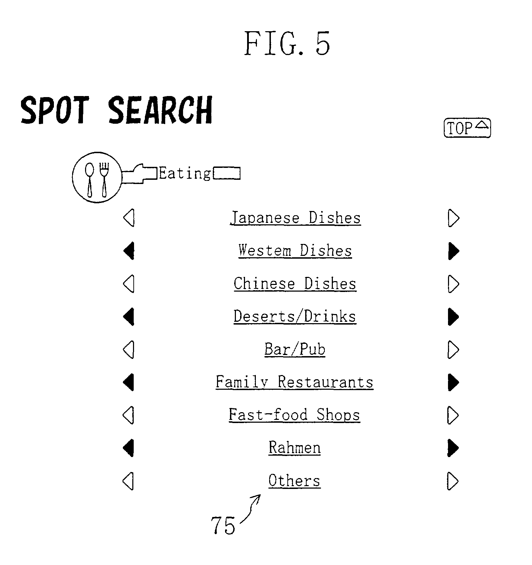

When making a "Search on Genre", the user clicks one of items, i.e., "Eating", "Staying", "Playing", "Sports", "Tour/ Excursion", "Life/Shops", "Transport", "Drive", "SS" and "Others", which are placed as link buttons in the "Search on Genre" column **74a.** If the user selects and clicks "Eating", the corresponding data is transmitted from the navigation equipment **2** or the PC **3** to the server **41** and the server **41** then sends back a next HTML document. As a result, the navigation equipment **2** or the PC **3** presents a page that includes link buttons showing a list of optional items **75,** on which "Japanese Dishes", "Western Dishes", "Chinese Dishes", "Deserts/Drinks", "Bar/Pub", "Family Restaurants", "Fast-food Shops", "Rahmen" and "Others" items are aligned as for example shown in Figure **5**.

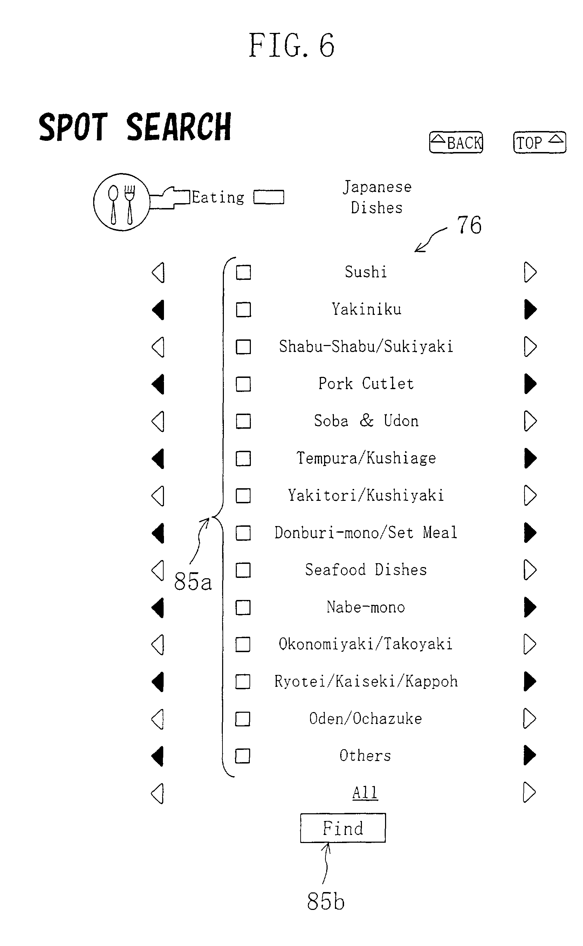

This page is for setting a search condition by selecting one of the above items. For example, if the user clicks "Japanese Dishes", the corresponding data is transmitted from the navigation equipment **2** or the PC **3** to the server **41** and the server **41** then sends back a next HTML document. As a result, the navigation equipment **2** or the PC **3** presents a page that includes link buttons showing a list of optional items **76,** on which *"Sushi",* "*Yakiniku*", *"Shabu-Shabu/Sukiyaki*", "Pork cutlet", "*Soba/Udon*", "*Tempura/ Kushiage*", "*Yakitori/Kushiyaki*", "*Donburi-mono/*Set Meal", "Seafood Dishes", "*Nabe-mono*", *"Okonomiyaki/Takoyaki", "Ryotei/Kaiseki/Kappoh*", "*Oden/Ochazuke*" and "Others" items are aligned as for example shown in Figure **6.**

On this page, check boxes **85a** are placed on the left sides of the respective items. The user can set search conditions by checking one or more check boxes **85a** for items he wants to search for. Further, "All" item is placed on the page. If the user clicks this "All" item, all the above check boxes **85a** are checked.

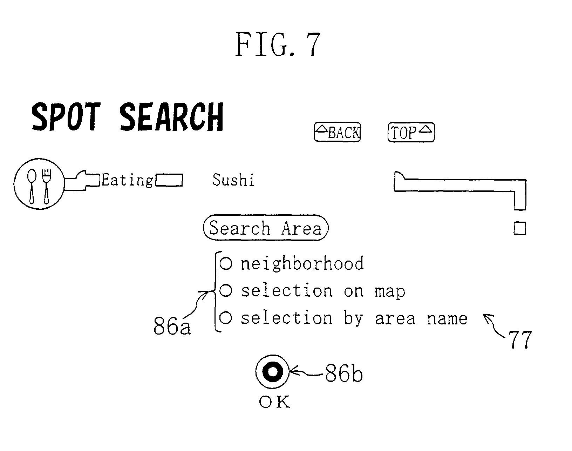

If now "*Sushi*" item is checked and a "Find" push button **85b** at the bottom of this page is clicked, the corresponding data is transmitted from the navigation equipment **2** or the PC **3** to the server **41** and the server **41** then sends back a next HTML document. As a result, the navigation equipment **2** or the PC **3** presents a page for selecting a search area for *"Sushi"* search as for example shown in Figure **7**.

This page is set so that the user can select one of three optional items **77**, i.e., "neighborhood", "selection on map" and "selection by area name". Radio buttons **86a** are placed on the left sides of the respective optional items **77**. The user selects one of these radio buttons and then clicks an "OK" push button **86b** placed at the bottom of this page. As a result, the corresponding data is transmitted from the navigation equipment **2** or the PC **3** to the server **41.** If the user selects "neighborhood", search will be made based on the user's address registered in his database **41d** of the server 41.

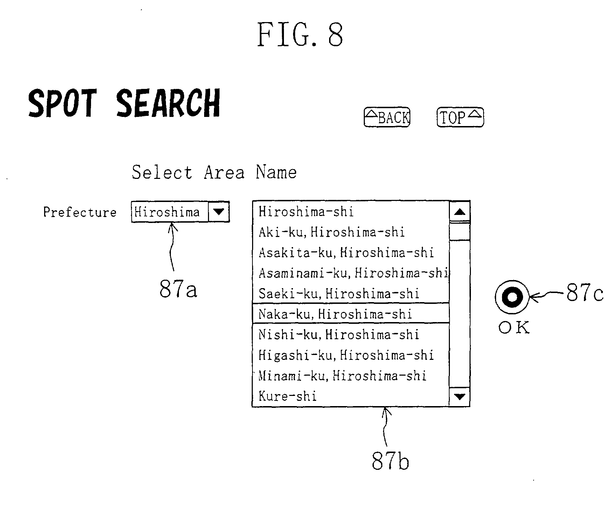

On the other hand, if the user selects "selection by area name", a page for selecting an area name is displayed on the navigation equipment **2** or the PC **3** by a next HTML document sent from the server **41**, as shown in Figure **8**. A drop-down menu **87a** for selecting a prefecture is placed at a left-hand part of this page. If the user selects any one of prefectures from the drop-down menu **87a**, a list of municipalities (cities, towns and villages) in the selected prefecture will be displayed in a scroll text box **87b** placed on the right side of the drop-down menu **87a.** When the user selects any one of municipalities in the scroll text box **87b** and clicks an "OK" push button **87c,** the corresponding data is transmitted to the server **41**.

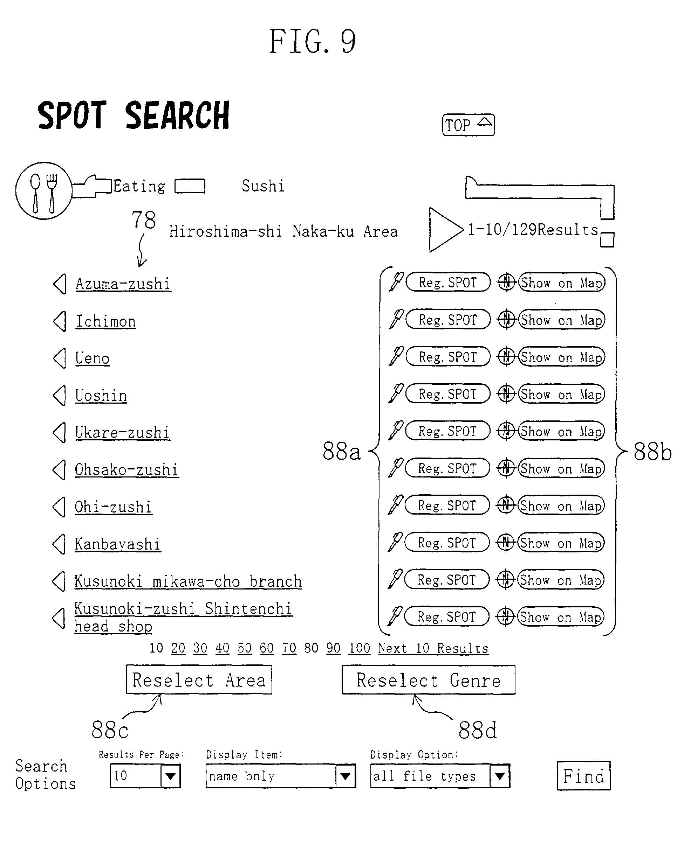

Now suppose the user selects "Hiroshima" as a prefecture and "Naka-ku, Hiroshima-shi" as a municipality. In this case, the server **41** searches for registered sushi shops associated with "Naka-ku, Hiroshima-shi" and sends search results to the navigation equipment **2** or the PC **3**. As a result, a page including a list **78** in which sushi shops within the "Hiroshima-shi Naka-ku" area are aligned as link buttons as shown in Figure **9** is displayed on the navigation equipment **2** or the PC **3**. This page showing the search results is set to present pieces of information as search results by 10 items, and to jump to another page which shows some or all of the remaining search results by clicking one of "10" to "100" and "next 10" link buttons placed at a lower part of this page.

Further, "Reselect Area" and "Reselect Genre" push buttons **88c** and **88d** are placed on the page showing the search results. If the user clicks either one of these buttons **88c** and **88d,** he can go back to area selection or genre selection page and make a search based on new conditions.

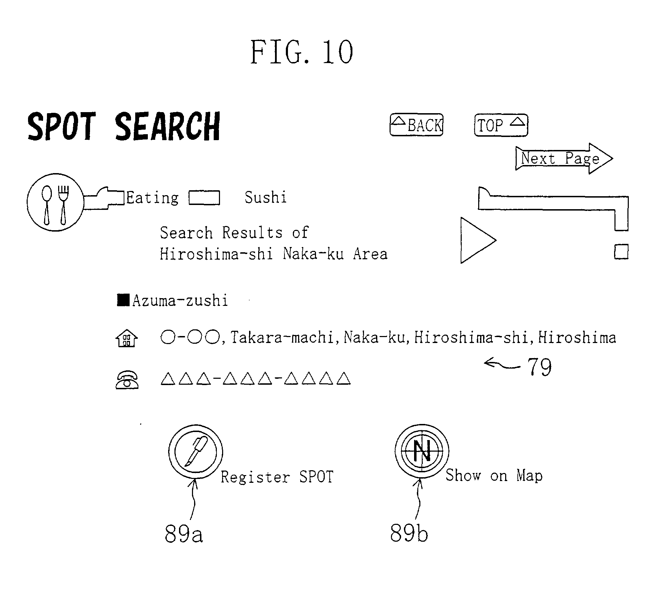

Furthermore, the user can know detailed information on facilities (shop) as the search result. More specifically, when the user clicks the link button for each shop item on the page presenting the search results, data is transmitted from the navigation equipment **2** or the PC **3** to the server **41** and the server **41** then sends back the associated data. As a result, the navigation equipment **2** or the PC **3** presents information on the address and phone number of the selected shop ("*Azuma-zushi*" in the figure) as shown in Figure **10.**

Moreover, on the page presenting the search results, a "Reg. SPOT" push button **88a** is placed for each shop item. If the user clicks any one of the "Reg. SPOT" push buttons **88a**, information on the corresponding shop is registered in his own database **41d** of the server **41**. The information on that shop registered in this manner will be displayed in the "CLICK FAVORITES" column **73c** on the above-described CUSTOM PAGE (see Figure **3**).

Still further, on the page presenting the search results, a "Show on Map" push button **88b** is placed for each shop item. If the user clicks one of the "Show on Map" push buttons **88b,** the navigation equipment **2** or the PC **3** presents a map on which the location of the sushi shop required for "Show on Map" is additionally indicated. Specifically, when the user clicks the "Show on Map" push button **88b**, data for requesting map presentation of the particular sushi shop is transmitted from the navigation equipment **2** or the PC **3** to the server **41.** The server **41** then sends back to the navigation equipment **2** or the PC **3** a piece of scale data (map selection data) that specifies a map to be selected from among a plurality of maps contained in the navigation equipment **2** or the PC **3** and a piece of data (coordinate data) that specifies which point on the selected map an image representing facilities is added to.

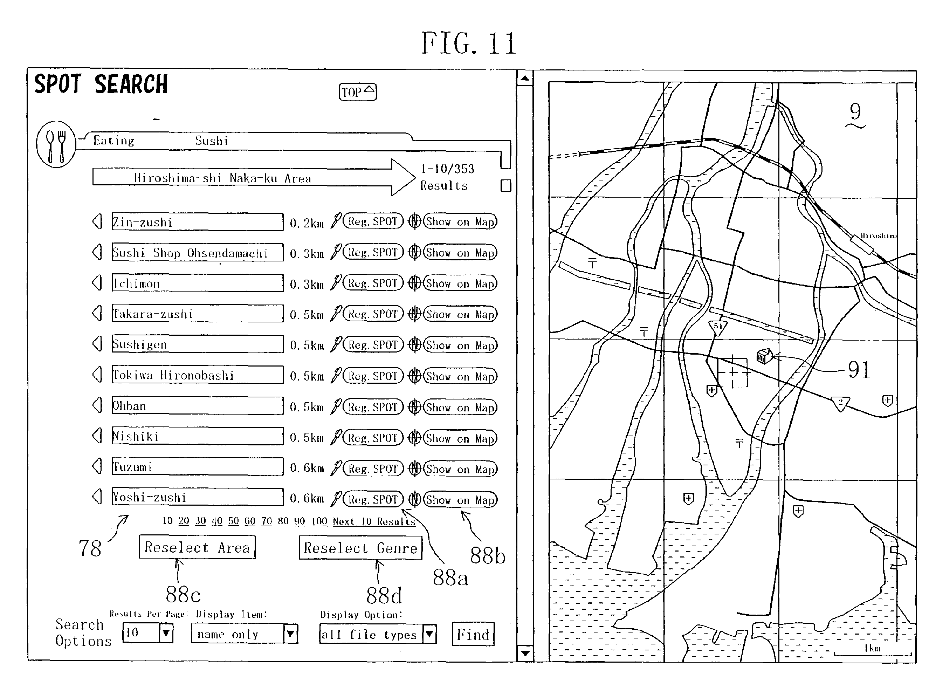

In the navigation equipment **2** or the PC **3** having received the piece of map selection data and the piece of coordinate data, the plug-in contained therein selects a map of specified scale, adds a particular image (an image representing the sushi shop) to a specified point on the map, and in this state presents the map. In this manner, on the navigation equipment **2** or the PC **3**, the list **78** of the search results is displayed in a left-hand region of the page while the map **9** which indicates the point of the sushi shop as an icon **91** is displayed in a right-hand region of the page, as for example shown in Figure **11**.

If the information service system is configured in the above manner to provide the user with only data to be added to a map based on the use of map data contained in the navigation equipment **2** or the PC **3**, the system can provide spot information on facilities or the like without transmitting map data from the server **41** to the navigation equipment **2** or the PC **3**. Accordingly, the traffic volume can be extensively reduced and required communication time and charge can be thereby reduced.

Further, since no image data such as icons is not transmitted from the server **41** to the navigation equipment **2** or the PC **3**, this further reduces the traffic volume. Furthermore, since the navigation equipment **2** or the PC **3** constructs a page for presentation using image data contained in itself, the constructed page can obtain excellent visibility and operability.

Consequently, according to the present invention, an information service system highly convenient for users and available at a low cost can be implemented.

## Claims

1. An information service system comprising:
an in-vehicle unit mounted in a vehicle;
a computer installed at a specific location other than the vehicle; and
a server linked to the in-vehicle unit and the computer via a network,
wherein the in-vehicle unit and the computer each contain map data,
the server contains additional information to be presented on maps and is configured to transmit the additional information as data in specific format to the in-vehicle unit or the computer, and
the in-vehicle unit and the computer are configured to present the individual maps by adapting each piece of the data in specific format transmitted from the server to the associated piece of map data and then adding the information related to the piece of data in specific format onto the associated map.

2. The information service system of Claim 1, wherein
the in-vehicle unit or the computer contains pieces of image data embeddable in an HTML document in addition to the pieces of map data,
the server contains pieces of map selection data each of which specifies a map to be selected, pieces of coordinate data each of which specifies a point where the additional information is to be presented on the selected map, pieces of HTML document data, and pieces of image selection data each of which specifies an image to be embedded in the HTML document and is configured to transmit the map selection data, coordinate data, HTML document data and image selection data to the in-vehicle unit or the computer, and
the in-vehicle unit or the computer is configured to present the individual maps by selecting a specified map from among the pieces of map data based on the associated piece of map selection data transmitted from the server and adding the information to a specified point on the selected map based on the associated piece of coordinate data transmitted from the server and present the HTML document by selecting a specified image from among the pieces of image data based on the associated piece of image selection data transmitted from the server and adding the selected image to a specified point on the associated piece of HTML document data transmitted from the server.

3. A server linked to an in-vehicle unit and a computer via a network, the in-vehicle unit being mounted in a vehicle and containing map data, the computer being installed at a specific location other than the vehicle and containing map data,
wherein the server contains additional information to be presented on maps and is configured to transmit the additional information as data in specific format to the in-vehicle unit or the computer via the network.

4. An in-vehicle unit that is mounted in a vehicle and contains map data and a processing program of performing processing with the use of the map data,
wherein the in-vehicle unit contains a plug-in for the processing program and is linked via a network to a server containing additional information to be presented on maps, and
the plug-in is configured to adapt data in specific format corresponding to the additional information having been transmitted from the server to the processing program.

5. A record medium on which a program which can be read out by an in-vehicle unit is recorded, the in-vehicle unit being mounted in a vehicle and linked via a network to a server containing additional information to be presented on maps,
wherein the record medium contains map data, a processing program of performing processing with the use of the map data, and a plug-in for the processing program, and
the plug-in is configured to adapt data in specific format corresponding to the additional information having been transmitted from the server to the processing program.

6. A record medium on which a program is recorded which can be read out by a computer, the computer being installed at a specific location other than a vehicle and linked via a network to a server containing additional information to be presented on maps,
wherein the record medium contains map data, a processing program of performing processing with the use of the map data, and a plug-in for the processing program, and
the plug-in is configured to adapt data in specific format corresponding to the additional information having been transmitted from the server to the processing program.

7. The record medium of Claim 6, wherein the map data, processing program and plug-in are software bundled to the computer.
